(19) Europäisches Patentamt
European Patent Office
Office européen des brevets

(11) EP 0 767 895 B1

(12) **EUROPEAN PATENT SPECIFICATION**

(45) Date of publication and mention
of the grant of the patent:
**20.01.1999 Bulletin 1999/03**

(51) Int Cl.⁶: **G01F 1/36**, G01F 1/42,
G01F 1/50, G01F 1/88

(21) Application number: **95923586.2**

(22) Date of filing: **29.06.1995**

(86) International application number:
**PCT/NL95/00229**

(87) International publication number:
**WO 96/00883 (11.01.1996 Gazette 1996/03)**

(54) **GAS PRESSURE REGULATOR WITH INTEGRATED FLOW RATE MEASUREMENT**

GASDRUCKMESSER MIT EINHEITLICHEN DURCHFLUSSMESSER

REGULATEUR DE PRESSION GAZEUSE A DEBITMETRE INTEGRE

(84) Designated Contracting States:
**DE FR GB NL**

(30) Priority: **30.06.1994 NL 9401099**

(43) Date of publication of application:
**16.04.1997 Bulletin 1997/16**

(73) Proprietor: **DELTEC FUEL SYSTEMS B.V.**
**NL-3047 AH Rotterdam (NL)**

(72) Inventors:
• **KLIMSTRA, Jacob**
**NL-9286 GA Twijzel (NL)**

• **WOLTERS, Leendert**
**NL-3161 EK Rhoon (NL)**

(74) Representative: **de Bruijn, Leendert C. et al**
**Nederlandsch Octrooibureau**
**P.O. Box 29720**
**2502 LS Den Haag (NL)**

(56) References cited:
EP-A- 0 061 856          EP-A- 0 223 300
EP-A- 0 370 557          EP-A- 0 522 708
EP-A- 0 585 920          FR-A- 2 617 592
GB-A- 1 566 251

## Description

The present invention relates to a measuring device for measuring a fluid flow rate of a fluid flow according to the preamble of claim 1.

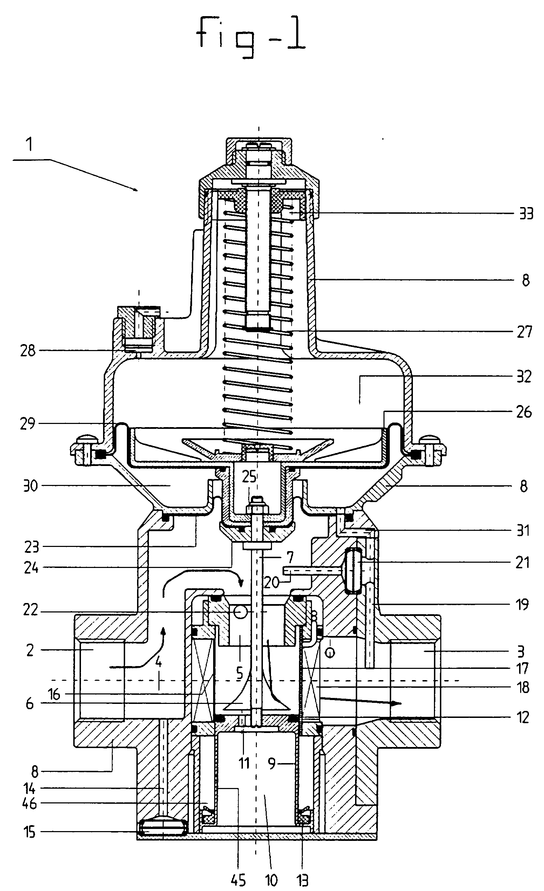

Such a measuring device is known from the French patent 2.617.592. The measurement device shown in this patent is provided with a fluid inlet and a fluid outlet, as well as a nose cone which can be moved up and down by means of a shaft to shut off a passage. A small side opening is arranged upstream from the passage, which is connected to a small tube the other side of which is connected to an absolute pressure sensor. This small tube also leads to a difference pressure sensor. This difference pressure sensor also has a connection to a second side opening which leads to the passage referred to above at the location where the nose cone can shut off the passage. Moreover, the known measuring device is provided with a temperature sensor. All sensors referred to are connected to an arithmetic unit. Moreover, the position of the nose cone relative to the passage can be determined such that the fluid rate can be determined by means of classical formulas. For that purpose the known device uses a look-up table. From figure 1 of the French patent it can be deduced that the nose cone has a conic shape. Especially with smaller fluid flows, shut-off means with such a conic shape result in an insufficient amount of measurement accuracy. The measurement error in the fluid flow is not constant in the entire fluid rate range. Moreover, it is a disadvantage of the known device that the second opening referred to above, which is connected to the difference pressure sensor, leads to the passage at the location where the nose cone is able to shut off the passage. Such a position of the second opening renders the known measuring device less suitable for measuring dynamic pressure.

Further measuring devices are known from GB-A-1 566 251 and EP-A- 0 522 708.

A further measuring device for measuring fluid flows is known from European Patent Application No. 0,061,856. The measuring device disclosed therein relates to an air supply system for an internal combustion engine. The air supply is regulated by means of a valve, the position of which can be regulated by means of, for example, the accelerator in a car. The known device comprises a temperature sensor for measuring the temperature of the air upstream of the valve, a pressure sensor for measuring the pressure upstream of the valve, a second pressure sensor for measuring the pressure difference over the valve, and a position sensor for determining the position of the valve. The output signals from these four sensors are fed to an arithmetic unit, which calculates the flow rate of the air flow to the internal combustion engine on the basis of the amplitudes of the transmitted output signals from these sensors. The arithmetic unit calculates the flow rate by means of the following formula:

$$Qgn = K \cdot \sqrt{\frac{P1 \cdot \Delta P}{T1}}$$

in which:

Qgn = fluid flow rate (or consumption)
K = valve coefficient
$\Delta P$ = fluid pressure difference over the measuring device
P1 = fluid pressure at the inlet of the measuring device
T1 = absolute fluid temperature at the inlet of the measuring device

In this case K depends on the valve position, and on the values of P, $\Delta P$ and T. K is derived during use from a look-up table stored in a suitable memory of the arithmetic unit.

It is desirable to provide a measuring device for measuring a fluid flow rate of a fluid flow in which an arithmetic unit can calculate the fluid flow rate on the basis of the formula given above for Qgn, and the valve coefficient K can be calculated as a lynomial without detracting from the desired measuring accuracy. In that case no look-up table need be consulted in the memory of the arithmetic unit, which saves time. However, this sets high standards for the valve used. The primary object of the present invention is then to provide such a valve by means of which this object can be achieved.

A further object of the invention is to provide a measuring device which achieves this object and also provides an automatic gas pressure regulator which is capable of maintaining the outlet pressure of the fluid leaving the measuring device at a substantially constant level.

To this end, the measuring devic of the type mentioned at the beginning is characterized in that the external surface of the shutt-off means is shaped such that the diameter of the circular cross-section of a plane perpendicular to said axis and said shutt-off means increases substantially exponentially as a function of the axial location of the point of intersection between said axis and said circular cross-section.

The advantage of such a measuring device is that the measurement error does not increase with decreasing fluid flows but that it remains substantially constant over the entire fluid rate and that valve coefficient K depends solely on the position of the shut-off means, and not on the fluid pressure (differences) in the valve. The relation between the valve coefficient K and the position of the shut-off means over a large range of the position of the shut-off means can be approximated by a polynomial of the 4th degree (least squares fit). It has emerged from experiments that the approximation over the above-mentioned range by means of the above-mentioned polynomial gives a deviation of less than 2% between the actual valve coefficient and the calculated valve coefficient.

It also appears that no perceptible hysteresis occurs during opening and closing of the shut-off means, and that this measuring device according to the invention can also be used satisfactorily in low pressure gas mains.

In a preferred embodiment the shut-off means are fixed to a movable rod projecting through the passage, and the temperature sensor means are disposed on said rod.

In this preferred embodiment the measuring device comprises a housing, and the rod is connected at one side to a control element which is fixed to the housing by means of a first membrane and a second membrane in such a way that a control space is present between the first and the second membrane, which control space is connected to the fluid outlet by way of a channel, in such a way that the fluid pressure at the fluid outlet determines the position of the control element against the action of a spring. The use of these additional measures means that the pressure of the fluid at the outlet of the measuring device is substantially constant during operation.

The position sensor means can be, for example, a built-in capacitive height sensor.

The measuring device according to the invention is preferably characterized in that the arithmetic unit comprises a throughflow surface arithmetic unit and a consumption arithmetic unit, which throughflow surface arithmetic unit is connected to the position sensor means, for the purpose of receiving a position signal and is arranged to generate a throughflow surface signal on the basis thereof, and which consumption arithmetic unit is connected to the throughflow surface arithmetic unit, the temperature sensor means, the first pressure sensor means and the second pressure sensor means, for the purpose of receiving the throughflow surface signal, a temperature signal, a pressure signal and a pressure difference signal, respectively, and is arranged to generate a consumption signal on the basis thereof. The fluid flow rate (or the consumption) is simple to calculate with such a structure. The consumption arithmetic unit is then arranged to calculate the consumption signal according to the following formula, which is already known from European Patent Application No. 0,061,856 discussed above.

The valve coefficient can be stored in the memory as a 4th degree polynomial function of the position of the shut-off means, but in order to be able to indicate the actual relation more accurately, below a predetermined value of the position of the shut-off means it is preferable to use another polynomial function which better approximates the relation actually occurring in this range.

The invention will be explained below with reference to the appended figures, in which a preferred embodiment of the measuring device according to the invention is shown, and which is intended to illustrate and not to limit the idea of the invention.

Figure 1 shows a preferred embodiment of a valve used in the measuring device;

Figure 2 shows a block diagram of the measuring device;

Figure 3 shows a graph of the relation between the fluid flow rate and the position of the shut-off means;

Figure 4 shows a graph of the relation between the valve coefficient and the position of the shut-off means.

The valve used in the measuring device is shown in Figure 1. The valve 1 has a fluid inlet 2 and a fluid outlet 3. Fluid flowing through the valve 1 follows a predetermined path, which is indicated by arrows 4. The fluid flows, inter alia, through a passage 5 of a predetermined diameter which can be shut off. Said passage 5 can be shut off and opened in the valve 1 according to the invention by means of a sleeve 6, whose external surface has an exponential-type curve, as shown clearly in Figure 1. The tapering point of this exponential-type sleeve is directed towards the passage 5. The sleeve 6 is non-slidably fixed on a rod 7 projecting through the passage 5. At the bottom side the rod 7 is fixed to a slide 9 which is movable relative to the housing 8 of valve 1. The slide 9 is slidable at the top side between walls of a valve position sensor 17. Said valve position sensor 17 can be, for example, a built-in capacitive height sensor, but other position sensors known in the art can also be used. An O-ring 12 is situated between the slide 9 and the wall 16 of the valve position sensor 17.

The movable slide 9 encloses a space 10 which by way of a channel 11 is in communication with the passage channel for the fluid in the measuring device. Situated between the wall of the slide 9 and the wall of the housing 8 is a space 46 which is in communication with the space 10 by way of a channel 45 in the wall of the slide 9. Owing to the channels 11 and 45, no pressure differences can occur between the spaces 10, 46 and the passage in the measuring device, which would make the sliding up and down of the slide 9 difficult. The slide 9 is sealed off relative to the housing 8 by means of a suitable seal 13.

Situated near the mouth of the fluid inlet 2 is a channel 14 which leads to a pressure sensor 15 for measuring the pressure of the inflowing fluid at the fluid inlet 2 of the valve 1.

A temperature sensor 22 is disposed in the gas inlet. However, the temperature sensor 22 can also be disposed at another point if desired, for example closer to the fluid inlet 2.

Electronics 18 can be provided inside the valve 1, on the wall 16 of the valve position sensor 17.

The valve 1 also comprises a pressure sensor 21, for measuring the pressure difference between the fluid inlet 2 and the fluid outlet 3. For this purpose, the pressure sensor 21 is in communication with the.fluid inlet 2 by way of a channel 20 at one side of the pressure sensor 21, and in communication with the fluid outlet 3 by way of another channel 19 at the other side of the pressure sensor 21.

The rod 7 on which the sleeve 6 is mounted is fixed at the top side by means of suitable connection means 25 to a control element 26. In the embodiment shown in Figure 1 the control element 26 is, as it were, a double U-shape, with a first U-shaped part and a second U-shaped part, the second U-shaped part having a greater diameter than the first U-shaped part and being stacked on the first U-shaped part. A first membrane 23, which forms a gas-tight seal between the space in which the rod 7 is situated and the space above the first membrane 23, is situated between the wall of the housing 8 of the valve 1 and the bottom side of the smaller U-shaped part of the control element 26.

The second, larger U-shaped part of the control element 26 is fixed by means of a second membrane 29 to the wall of the housing 8. There is consequently a space 30 between the first membrane 23 and the second membrane 29. Said space 30 is in communication with the sensor 21 by way of a channel 31, which opens out at the same side of the pressure sensor 21 as the channel 19, which leads to the fluid outlet 3. The pressure inside a space 30 is therefore substantially the same as the pressure at the fluid outlet 3 of the valve 1.

The control element 26 can move up and down in its entirety along with the rod 7. Situated between the top side of the control element 26 and the top edge of the housing 8 is a spring 27, which presses the control element 26 downwards. The spring 27 is situated in a space 32, which is shut off in an airtight manner from the space 30 by means of the second membrane 29. The space 32 is in communication with the outside atmosphere by way of a channel 28, so that no excess pressure or vacuum can arise in the space 32 through movement of the control element 26.

During use, fluid is present in the space 30 between the two membranes 23, 29, at the same pressure as the fluid pressure at the fluid outlet 3. The fluid pressure in the space 30 produces an upward force against the action of the spring 27, in such a way that the control element 26 seeks a position of equilibrium. If during use the fluid consumption increases at the fluid outlet 3, the pressure there will fall, and the pressure in the space 30 between the two membranes 23, 29 will also fall. Under the influence of the action of the spring 27, the control element 26 will then move downwards, with the result that the rod 7 with the sleeve 6 also moves downwards, and the opening between the sleeve 6 and the passage 5 for the throughflow of the fluid is increased. As a result, the quantity of fluid flowing through the measuring device to the fluid outlet 3 is increased, and the pressure at the fluid outlet increases again. This increasing pressure will therefore occur in the space 30 between the two membranes 23, 29, with the result that the control element 26 moves upwards again, just to the point where the state of equilibrium is achieved again. With such a device, the outlet pressure near the fluid outlet 3 can be maintained at a substantially constant level, irrespective of the load at the fluid outlet 3. The value of the pressure at the fluid outlet 3 can be set beforehand through selection of a predetermined spring constant of the spring 27. The housing 8 can be provided with a removable closure 33, for example at its top side, by means of which closure the spring 27 can be replaced by another spring with a different spring constant.

It is also pointed out that the valve 1 in Figure 1 is shown in a position out of operation, in which no fluid is being passed through the valve 1. This means that there is no pressure present in the space 30 between the two membranes 23, 29, with the result that the control element 26 is being subjected to substantially no upward force and is being subjected only to a downward force under the influence of the spring 27. The distance between the sleeve 6 and the passage 5 is consequently at the maximum, and the valve 1 is fully open. As soon as fluid is supplied to the valve 1 through the fluid inlet 2, a pressure will develop at the fluid outlet 3 and in the space 30, with the result that the control element 26 will seek a position of equilibrium, and the sleeve 6 moves in the direction of the passage 5.

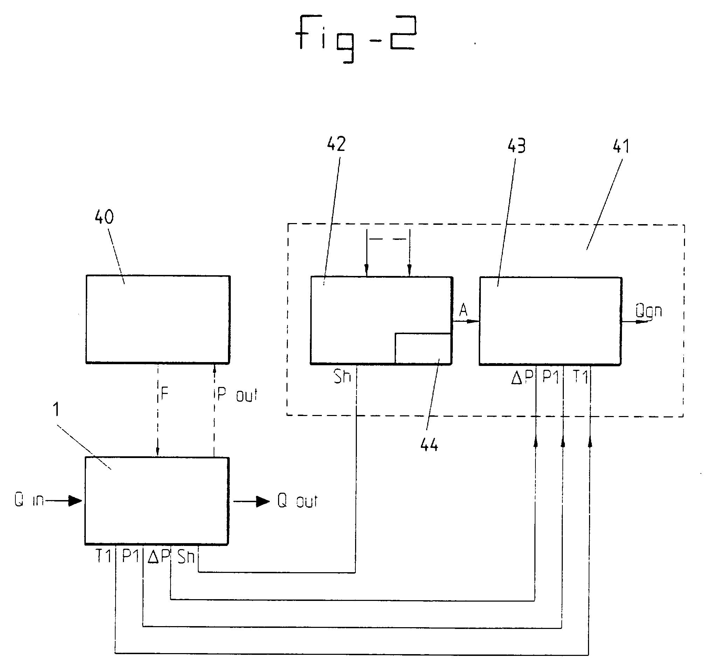

Figure 2 shows a block diagram of the electrical circuit of the measuring device. The valve 1 receives a fluid flow Qin and delivers a fluid flow Qout. The control element 26 (Fig. 1) is indicated by a block 40 in Figure 2, which indicates diagrammatically the operation thereof. The control system 40 is in fact a pneumatic control system, which functions fully automatically and on the basis of an input signal Pout, which is representative of the outlet pressure of the fluid near the fluid outlet 3 of the valve 1, generates a force F for controlling the position of the sleeve 6 relative to the passage 5 in the valve 1.

An arithmetic unit 41 receives four signals from the valve 1: a temperature signal T1 from the temperature sensor 22, a pressure signal P1 from the pressure sensor 15, a pressure difference signal $\Delta P$ from the pressure sensor 21, and a position signal Sh from the valve position sensor 17.

The following formula applies for the relation between the fluid flow rate Qgn and the various parameters measured:

$$Qgn = K \cdot \sqrt{\frac{P1 \cdot \Delta P}{T1}}$$

in which:

Qgn = fluid flow rate (or consumption)
K = valve coefficient
$\Delta P$ = fluid pressure difference over the valve 1
P1 = fluid pressure at the inlet of the valve
T1 = absolute fluid temperature near the inlet of valve 1

Owing to the special exponential-type sleeve 6, it is found that over a very wide range of the position of the sleeve 6 the valve coefficient K depends solely on the position of the sleeve 6, and not on the other parameters. Since the valve coefficient K depends substantially solely on the valve position, the arithmetic unit 41 can be suitably made up of two blocks, i.e. a throughflow surface arithmetic unit 42 and a consumption arithmetic unit 43. The throughflow surface arithmetic unit 42 receives only the position signal Sh, while the consumption arithmetic unit 43 receives the output signal A of the throughflow surface arithmetic unit 42, the temperature signal T1, the pressure signal P1, and the differential pressure signal ΔP. The output signal A of the throughflow surface arithmetic unit 42 is directly proportional to the valve coefficient K. The consumption arithmetic unit 43 now need only multiply the magnitude of the throughflow surface A by a factor which is proportional to $\sqrt{(\Delta P \cdot P1/T1)}$.

Figure 3 shows a graph of the relation between the fluid flow rate and the valve position for a valve 1 according to Figure 1, as measured in a flow rate range between 0 and 6 $m^3$ of natural gas per hour. Figure 3 shows three curves for three different pressures P1 at the fluid inlet 2 of the valve 1, i.e. 80 mbar, 100 mbar and 120 mbar. The pressure at fluid outlet 3 of the valve 1 was held substantially constant at 30 mbar. The curves shown in Figure 3 are found to comply very well with the formula given above for the fluid flow rate Qgn.

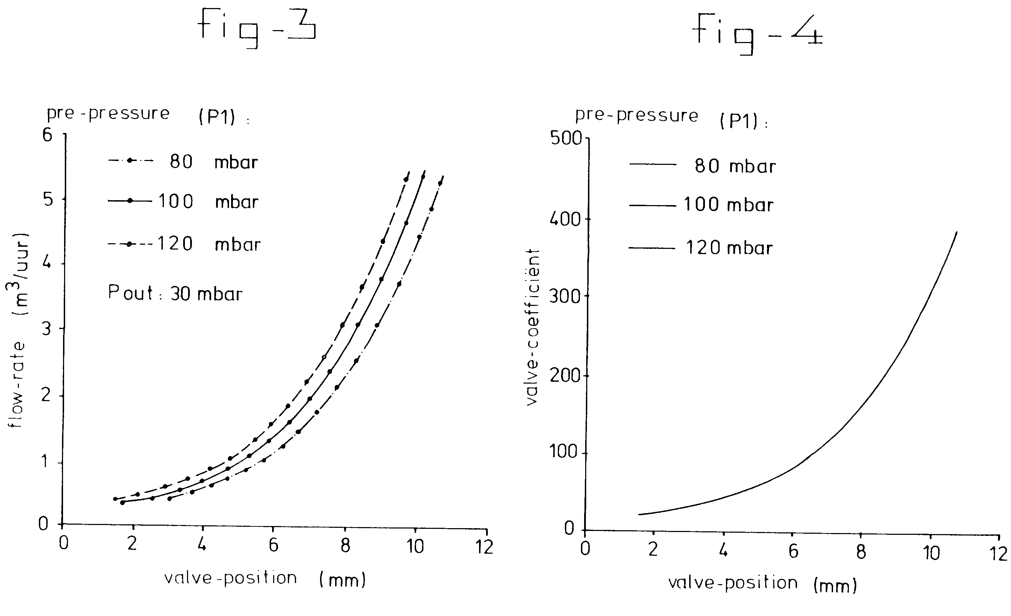

Figure 4 shows a graph with a relation between the valve coefficient K and the valve position for the valve according to Figure 1. The curve shown in Figure 4 is in fact a coinciding curve for three situations, namely with a pressure at the fluid inlet 2 of 80 mbar, 100 mbar and 120 mbar respectively. It can thus be seen from Figure 4 that the valve coefficient depends solely on the valve position, and not on the pressures occurring over the valve 1.

If the curve according to Figure 4 is approximated by means of a polynomial of the 4th degree by means of a least squares fit, then for a fluid flow rate between the limits of 1 and 5 $m^3$/hour a deviation of less than 2% is found to occur.

In order to obtain a smaller deviation between the actual fluid flow rate and the calculated fluid flow rate by means of the above formula, it is desirable to split the curve according to Figure 4 into two parts, i.e. a first part for valve positions smaller than, for example, 4 mm and a second curve for valve positions greater than 4 mm. For valve positions above 4 mm a 4th degree polynomial can then be derived, while for the part below 4 mm another polynomial can be derived. In this way it is found to be possible to achieve a deviation of less than 1.5% in a fluid flow rate range between 0.5 and 5 $m^3$/hour.

It is found that a very high degree of repeatability of measurements can be achieved with the valve 1 according to the invention. It has been found from experiments until now that no hysteresis-type effects occurred during stepwise opening and closing of the valve 1.

The accuracy of the measuring device according to the invention has also been tested in a situation in which a gas flow rate is being measured, where the inlet pressure P1 near the fluid inlet 2 of the valve 1 is significantly lower than 100 mbar. This is important because such a situation commonly occurs in the public gas mains and it is desirable that the present measuring device can also be used there. It has been found from experiments that the present invention there again produces satisfactory results and the deviation for flow rates between 0.25 and 4 $m^3$/hour in any case remains well below 5%.

It will be clear to a person skilled in the art that the measuring device according to the invention shown in the figures is only an example, and that other embodiments are also possible. For example, the construction inside the valve 1 by means of which the sleeve 6 can be moved in the direction towards and in the direction away from the passage 5 is not restricted to that shown in Figure 1. The only essential feature is the special exponential-type external surface of the sleeve 6 and the presence of means for moving the sleeve 6 to and fro. The control valve 26 can also be a different type. All that is essential for it is that the control element 26 can in one way or another assume a state of equilibrium, in which the spring force exerted by spring means 27 is in equilibrium with the force exerted by the outlet pressure near the fluid outlet 3, and that this state of equilibrium is translated into a certain position of the sleeve 6 relative to the passage 5. It will also be clear to a person skilled in the art that the constructions shown for measuring the inlet pressure at the fluid inlet 2 and the pressure difference between the fluid inlet 2 and the fluid outlet 3 can also be achieved with differently designed means. The position of the sleeve 6 relative to the passage 5 can also be measured with any known position sensor.

Figure 2 indicates diagrammatically that the throughflow surface arithmetic unit 42 contains a memory 44, in which the polynomial(s) giving the relation between the valve coefficient K and the valve position is (are) stored. It will be clear to a person skilled in the art that the division of the arithmetic unit 41 into the diagrammatic blocks 42, 43 and 44 has been made for the sake of clarity. The arithmetic unit 41 can consist of a microprocessor, which carries out the necessary calculations and is provided with a separate memory, for example a ROM or EPROM, and in which the functional blocks 42 and 43 are not explicitly separated from each other. The output signal Qgn of the consumption arithmetic unit 43 provides the calculated fluid flow rate and can be, for example, fed to a display unit, such as a television screen, or to a recording unit, for example a printer or other storage means.

## Claims

1. Measuring device for measuring a fluid flow rate of a fluid flow, provided with a fluid inlet (2), a fluid outlet (3), a passage (5) for passing said fluid flow, shut-off means (6) movable along a predetermined axis through said passage (5) for shutting off said passage (5), position sensor means (17) for measuring the position of the shut-off means (6) in the direction along said axis, temperature sensor means (22) for measuring the fluid temperature, first pressure sensor means (15) for measuring the pressure near the fluid inlet (2), second pressure sensor means (21) for measuring the pressure difference over the measuring device (1), and an arithmetic unit (41) connected to the position sensor means (17), the temperature sensor means (22), the first pressure sensor means (15) and the second pressure sensor means (21), for calculating the fluid flow rate on the basis of output signals from the position sensor means (17), the temperature sensor means (22), the first pressure sensor means (15) and the second pressure sensor means (21), characterized in that the external surface of the shut-off means (6) is shaped such that the diameter of the circular cross-section of a plane perpendicular to said axis and said shut-off means (6) increases substantially exponentially as a function of the axial location of the point of intersection between said axis and said circular cross-section.

2. Measuring device according to Claim 1, characterized in that the shut-off means (6) are fixed on a movable rod (7) projecting through the passage (5).

3. Measuring device according to Claim 2, characterized in that it has a housing (8), in that the rod (7) is connected at one side to a control element (26) which is fixed to the housing (8) by means of a first membrane (23) and a second membrane (29) in such a way that a control space (30) is present between the first membrane (23) and the second membrane (29), which control space is connected to the fluid outlet (3) by way of a channel (19), in such a way that the fluid pressure at the fluid outlet (3) determines the position of the control element (26) against the action of a spring (27).

4. Measuring device according to one of the preceding claims, characterized in that the position sensor means are a built-in capacitive height sensor (17).

5. Measuring device according to one of the preceding claims, characterized in that the arithmetic unit (41) comprises a throughflow surface arithmetic unit (42) and a consumption arithmetic unit (43), which throughflow surface arithmetic unit (42) is connected to the position sensor means (17), for the purpose of receiving a position signal (Sh) and is arranged to generate a throughflow surface signal (A) on the basis thereof, and which consumption arithmetic unit (43) is connected to the throughflow surface arithmetic unit (42), the temperature sensor means (22), the first pressure sensor means (15) and the second pressure sensor means (21), for the purpose of receiving the throughflow surface signal (A), a temperature signal (T1), a pressure signal (P1) and a pressure difference signal ($\Delta$P) respectively, and is arranged to generate a consumption signal (Qgn) on the basis thereof.

6. Measuring device according to Claim 5, characterized in that the consumption arithmetic unit is designed to calculate the consumption signal (Qgn) according to the following formula:

$$Qgn = K \cdot \sqrt{\frac{P1 \cdot \Delta P}{T1}}$$

in which:

Qgn = fluid flow rate (or consumption)
K = valve coefficient
$\Delta$P = fluid pressure difference over the measuring device
P1 = fluid pressure at the inlet of the measuring device
T1 = absolute fluid temperature at the inlet of the measuring device,

where K depends on the position of the shut-off means (6) and is stored as a polynomial in a memory (44) of the throughflow surface arithmetic unit (42).

7. Measuring device according to Claim 6, characterized in that the valve coefficient is stored in the memory (44) as a fourth grade polynomial function of the position of the shut-off means (6).

8. Measuring device according to Claim 7, characterized in that above a predetermined value of the position of the shut-off means (6) the valve coefficient is stored in the memory (44) as a fourth grade polynomial function of the position of the shut-off means (6), and below said predetermined value as another polynomial function of the position of the shut-off means (6).

## Patentansprüche

1. Meßgerät zum Messen eines Fluiddurchflusses einer Fluid. strömung mit einem Fluideinlaß (2), einem Fluidauslaß (3), einem Durchlaß (5) zum Durchlassen der Fluidströmung, einer längs einer vorbestimmten Achse durch den Durchlaß (5) beweglichen Absperreinrichtung (6) zum Absperren des Durchlasses (5), einer Positionssensoreinrichtung (17) zum Messen der Position der Absperreinrichtung (6) in Richtung längs der Achse, einer Temperatursensoreinrichtung (22) zum Messen der Fluidtemperatur, einer ersten Drucksensoreinrichtung (15) zum Messen des Drucks nahe dem Fluideinlaß (2), einer zweiten Drucksensoreinrichtung (21) zum Messen der Druckdifferenz über dem Meßgerät (1) und einer mit der Positionssensoreinrichtung (17), der Temperatursensoreinrichtung (22), der ersten Drucksensoreinrichtung (15) und der zweiten Drucksensoreinrichtung (21) verbundenen Arithmetikeinheit (41) zum Berechnen des Fluiddurchflusses auf der Grundlage von Ausgangssignalen von der Positionssensoreinrichtung (17), der Temperatursensoreinrichtung (22), der ersten Drucksensoreinrichtung (15) und der zweiten Drucksensoreinrichtung (21), dadurch gekennzeichnet, daß die Außenfläche der Absperreinrichtung (6) so geformt ist, daß der Durchmesser des runden Querschnitts einer Ebene senkrecht zu der Achse und der Absperreinrichtung (6) als Funktion der axialen Lage des Schnittpunkts zwischen der Achse und dem runden Querschnitt im wesentlichen exponential zunimmt.

2. Meßgerät nach Anspruch 1, dadurch gekennzeichnet, daß die Absperreinrichtung (6) an einer beweglichen Stange (7) befestigt ist, die durch den Durchlaß (5) vorragt.

3. Meßgerät nach Anspruch 2, dadurch gekennzeichnet, daß es ein Gehäuse (8) hat, daß die Stange (7) auf einer Seite mit einem Steuerelement (26) verbunden ist, das an dem Gehäuse (8) mittels einer ersten Membran (23) und einer zweiten Membran (29) so befestigt ist, daß ein Steuerraum (30) zwischen der ersten Membran (23) und der zweiten Membran (29) vorhanden ist, wobei der Steuerraum mit dem Fluidauslaß (3) über einen Kanal (19) so verbunden ist, daß der Fluiddruck an dem Fluidauslaß (3) die Position des Steuerelements (26) gegen die Wirkung einer Feder (27) bestimmt.

4. Meßgerät nach einem der vorstehenden Ansprüche, dadurch gekennzeichnet, daß die Positionssensoreinrichtung ein eingebauter kapazitiver Höhensensor (17) ist.

5. Meßgerät nach einem der vorstehenden Ansprüche, dadurch gekennzeichnet, daß die Arithmetikeinheit eine Durchflußflächen-Arithmetikeinheit (42) und eine Verbrauch-Arithmetikeinheit (43) aufweist, wobei die Durchflußflächen-Arithmetikeinheit (42) mit der Positionssensoreinrichtung (17) zum Empfangen eines Positionssignals (Sh) verbunden und so angeordnet ist, daß sie ein Durchflußflächensignal (A) auf dessen Grundlage erzeugt, und wobei die Verbrauch-Arithmetikeinheit (43)'mit der Durchflußflächen-Arithmetikeinheit (42), der Temperatursensoreinrichtung (22), der ersten Drucksensoreinrichtung (15) und der zweiten Drucksensoreinrichtung (21) zum Empfangen des Durchflußflächensignals (A), eines Temperatursignals (T1), eines Drucksignals (P1) bzw. eines Druckdifferenzsignals (ΔP) verbunden und so angeordnet ist, daß sie ein Verbrauchsignal (Qgn) auf deren Grundlage erzeugt.

6. Meßgerät nach Anspruch 5, dadurch gekennzeichnet, daß die Verbrauch-Arithmetikeinheit so gestaltet ist, daß sie das Verbrauchsignal (Qgn) nach folgender Formel berechnet:

$$Qgn = K \cdot \sqrt{\frac{P1 \cdot \Delta P}{T1}},$$

worin sind:

Qgn = Fluiddurchfluß (oder -verbrauch),
K = Ventilkoeffizient,
ΔP = Fluiddruckdifferenz über dem Meßgerät,
P1 = Fluiddruck am Einlaß des Meßgeräts,
T1 = absolute Fluidtemperatur am Einlaß des Meßgeräts,

wobei K von der Position der Absperreinrichtung (6) abhängig ist und als Polynom in einem Speicher (44) der Durchflußflächen-Arithmetikeinheit (42) gespeichert wird.

7. Meßgerät nach Anspruch 6, dadurch gekennzeichnet, daß der Ventilkoeffizient in dem Speicher (44) als Polynomfunktion vierten Grades der Position der Absperreinrichtung (6) gespeichert wird.

8. Meßgerät nach Anspruch 7, dadurch gekennzeichnet, daß über einem vorbestimmten Wert der Position der Absperreinrichtung (6) der Ventilkoeffizient in dem Speicher (44) als Polynomfunktion vierten Grades der Position der Absperreinrichtung (6) und unter dem vorbestimmten Wert als weitere Polynomfunktion der Position der Absperreinrichtung (6) gespeichert wird.

**Revendications**

1. Dispositif de mesure du débit d'un fluide en écoulement, ledit dispositif étant doté d'une entrée de fluide (2), d'une sortie de fluide (3), d'un passage (5) pour faire passer ledit fluide en écoulement, de moyens obturateurs (6) déplaçables le long d'un axe prédéterminé à travers ledit passage (5) pour obturer ledit passage (5), de moyens capteurs de position (17) pour mesurer la position des moyens obturateurs (6) dans la direction le long dudit axe, de moyens capteurs de température (22) pour mesurer la température du fluide, de premiers moyens capteurs de pression (15) pour mesurer la pression à proximité de l'entrée de fluide (2), de seconds moyens capteurs de pression (21) pour mesurer la différence de pression sur tout le dispositif de mesure (1), et d'une unité arithmétique (41) connectée aux moyens capteurs de position (17), aux moyens capteurs de température (22), aux premiers moyens capteurs de pression (15) et aux seconds moyens capteurs de pression (21), pour calculer le débit de fluide sur la base de signaux de sortie des moyens capteurs de position (17), des moyens capteurs de température (22), des premiers moyens capteurs de pression (15) et des seconds moyens capteurs de pression (21), caractérisé par le fait que la surface externe des moyens obturateurs (6) est conformée de telle sorte que le diamètre de la section circulaire d'un plan perpendiculaire audit axe et auxdits moyens obturateurs (6) augmente sensiblement exponentiellement en fonction de l'emplacement axial du point d'intersection entre ledit axe et ladite section circulaire.

2. Dispositif de mesure selon la revendication 1, caractérisé par le fait que les moyens obturateurs (6) sont fixés sur une tige mobile (7) se projetant à travers le passage (5).

3. Dispositif de mesure selon la revendication 2, caractérisé par le fait qu'il possède un carter (8), par le fait que la tige (7) est connectée sur un côté à un élément de commande (26) qui est fixé au carter (8) au moyen d'une première membrane (23) et d'une seconde membrane (29) d'une manière telle qu'un espace de commande (30) est présent entre la première membrane (23) et la seconde membrane (29), lequel espace de commande est connecté à la sortie de fluide (3) au moyen d'un canal (19), d'une manière telle que la pression de fluide à la sortie de fluide (3) détermine la position de l'élément de commande (26) à l'encontre de l'action d'un ressort (27).

4. Dispositif de mesure selon l'une des revendications précédentes, caractérisé par le fait que les moyens capteurs de position sont constitués par un capteur capacitif de hauteur incorporé (17).

5. Dispositif de mesure selon l'une des revendications précédentes, caractérisé par le fait que l'unité arithmétique (41) comprend une unité arithmétique de surface d'écoulement (42) et une unité arithmétique de consommation (43), laquelle unité arithmétique de surface d'écoulement (42) est connectée aux moyens capteurs de position (17), dans le but de recevoir un signal de position (Sh) et est agencée pour générer un signal de surface d'écoulement (A) sur la base de celui-ci, et laquelle unité arithmétique de consommation (43) est connectée à l'unité arithmétique de surface d'écoulement (42), aux moyens capteurs de température (22), aux premiers moyens capteurs de pression (15) et aux seconds moyens capteurs de pression (21), dans le but de recevoir respectivement le signal de surface d'écoulement (A), un signal de température (TI), un signal de pression (P1) et un signal de différence de pression (ΔP), et est agencée pour générer un signal de consommation (Qgn) sur la base de ceux-ci.

6. Dispositif de mesure selon la revendication 5, caractérisé par le fait que l'unité arithmétique de consommation est agencée pour calculer le signal de consommation (Qgn) conformément à la formule suivante :

$$Qgn = K \cdot \sqrt{\frac{P1. \, \Delta P}{T1}}$$

dans laquelle :

Qgn = débit de fluide (ou consommation)
Q = coefficient de soupape
ΔP = différence de pression de fluide sur tout le dispositif de mesure.
P1 = pression de fluide à l'entrée du dispositif de mesure.
T1 = température absolue de fluide à l'entrée du dispositif de mesure,

où K dépend de la position des moyens obturateurs (6) et est stocké sous la forme d'un polynôme dans une mémoire (44) de l'unité arithmétique de surface d'écoulement (42).

7. Dispositif de mesure selon la revendication 6, caractérisé par le fait que le coefficient de soupape est stocké dans la mémoire (44) sous la forme d'une fonction polynomiale du quatrième degré de la position des moyens obturateurs (6).

8. Dispositif de mesure selon la revendication 7, caractérisé par le fait qu'au-dessus d'une valeur prédéterminée de la position des moyens obturateurs (6), le coefficient de soupape est stocké dans la mémoire (44) sous la forme d'une fonction polynomiale du quatrième degré de la position des moyens obturateurs (6), et au-dessous de ladite valeur prédéterminée sous la forme d'une autre fonction polynomiale de la position des moyens obturateurs (6).

# fig-1

# Fig-2

# Fig-3

pre-pressure  (P1) :

--•-- 80  mbar

--•-- 100  mbar

--•--120  mbar

Pout : 30 mbar

flow-rate  (m³/uur)

valve-position  (mm)

# Fig-4

pre-pressure  (P1) :

——— 80 mbar

——— 100 mbar

——— 120 mbar

valve-coëfficiënt

valve-position  (mm)

EP 0 767 895 B1